# EUROPÄISCHE PATENTSCHRIFT

(11) **EP 2 340 594 B1**
(45) Veröffentlichungstag und Bekanntmachung des Hinweises auf die Patenterteilung: **22.06.2016**
(21) Anmeldenummer: 09744945.8
(22) Anmeldetag: 06.10.2009
(51) Int. Cl.: H02J 1/10, H02J 7/34

(54) **ELEKTRISCHES ENERGIEVERSORGUNGSSYSTEM, INSBESONDERE IN EINEM LUFTFAHRZEUG**
ELECTRIC POWER SUPPLY SYSTEM, IN PARTICULAR IN AN AIRCRAFT
SYSTÈME DE DISTRIBUTION D'ÉNERGIE ÉLECTRIQUE, EN PARTICULIER À BORD D'UN AÉRONEF

(30) Priorität: 29.10.2008 DE 102008053745; 20.01.2009 DE 102009005270
(43) Veröffentlichungstag der Anmeldung: 06.07.2011
(73) Patentinhaber: Diehl Aerospace GmbH, 88662 Überlingen (DE)
(72) Erfinder: KNEPPLE, Ronny, 88662 Überlingen (DE); SPETH, Bernd, 88662 Überlingen (DE)
(74) Vertreter: Diehl Patentabteilung
(86) Internationale Anmeldenummer: PCT/EP2009/007150
(87) Internationale Veröffentlichungsnummer: WO 2010/049053

(56) Entgegenhaltungen:
- GB-A- 2 271 225
- US-A- 4 717 833
- US-A- 5 834 925
- US-A1- 2003 132 669
- US-A1- 2004 229 095

## Beschreibung

Die Erfindung betrifft ein elektrisches Energieversorgungssystem, insbesondere in einem Luftfahrzeug.

Ein derartiges System ist z.B. aus der GB 2271225 oder aus der DE 10 2007 017 820 A1 bekannt. Um an Bord eines Flugzeuges auf das herkömmliche, apparativ sehr aufwändige Turbinen-Generator-System verzichten zu können, das nur im Sonderfall einer Versorgungs-Notsituation und deshalb praktisch nie zum Einsatz gelangt aber dennoch für ständige Betriebsbereitschaft gewartet werden muss, ist dort dessen Ersatz durch eine Brennstoffzelle zur Notstromversorgung vorgesehen. Da aber auch im Notfall eine unterbrechungsfreie Stromversorgung gewährleistet bleiben muss, wird zusätzlich ein Energiespeicher gleicher Notstromleistung vorgehalten, der aus der regulären Stromversorgung ständig nachgeladen wird, um bei Ausfall der regulären Stromversorgung die Startphase der Brennstoffzelle überbrücken zu können.

Das bedeutet aber wieder funktionalen und apparativen Aufwand, dessen ständige Funktionsfähigkeit sicherzustellen ist, obgleich er nie benötigt werden soll. Stets bleibt die Ungewissheit, ob das an sich unbenutzte Notstromsystem notfalls wirklich zuverlässig einspringen wird. Denn ein so genannter schlafender Fehler, der bei einem nicht in Betrieb befindlichen System nicht auftritt, birgt das Restrisiko einer solchen Notstromversorgung.

Zwar müssen durchaus nicht alle Aggregate auch aus dem Notstromaggregat versorgt werden, insbesondere für zahlreiche Küchen- und Passagierkomfort-Funktionen steht, zur Begrenzung der erforderlichen Notfall-Leistung, allein die reguläre Stromversorgung zur Verfügung. Aber die Kosten und das Einbauvolumen der Notstromversorgung wachsen unweigerlich mit dem stark steigenden Bedarf an regulärer Stromversorgung an; und das sogar überproportional, weil, zumal in Passagiermaschinen, die funktionswesentlichen, traditionell fluiden Steuerungssysteme aktuell zunehmend durch elektrische Steuerungen ersetzt werden. Der generell ansteigende elektrische Leistungsbedarf ist von den dadurch immer schwerer werdenden Triebswerksgeneratoren kaum noch aufzubringen; bei der Maschine B787 müssen in jedes Schubtriebwerk schon zwei Elektrogeneratoren integriert werden, was die Komplexität und den Wartungsaufwand zusätzlich erhöht.

In Erkenntnis solcher Gegebenheiten liegt der Erfindung die technische Problemstellung zugrunde, eine elektrische Energieversorgung, insbesondere zum Einsatz in einem Luftfahrzeug, derart zuverlässig auszugestalten, dass sich der Aufwand für eine zusätzlich betriebsbereit zu haltende, autarke Notstromversorgung erübrigen lässt.

Diese Aufgabe ist erfindungsgemäß durch die im Hauptanspruch angegebenen wesentlichen Merkmale gelöst. Danach dient der regulären Stromversorgung eine ausgangsseitige Parallelschaltung von mehreren eigenständig funktionstüchtigen, modularen Elektro-Energiequellen wie passiven Speichern oder aktiven Zellen, die sämtlich nur im besonders wirtschaftlichen Betrieb unterhalb ihrer zulässigen Maximalbelastung beansprucht werden. Sollte einmal ein Modul dieses Energieversorgungssystemes ausfallen, werden die betriebstüchtig verbleibenden Module zwangsläufig stärker belastet. Deren Betrieb weist dann zwar einen geringeren Wirkungsgrad auf, aber es bedarf für diese Ersatz- oder Entlastungsfunktion keinerlei Notstrommanagement; bei Ausfall wenigstens eines der Module müssen die anderen nicht erst gestartet werden und hochlaufen, da sie ja bereits in kontrolliertem Betrieb arbeiten und lediglich fortan etwas stärker belastet werden, mit Verteilung des bisherigen Beitrags des ausgefallenen Modules auf alle anderen. Dieser ständig anstehende, reguläre Betrieb testierter Module, anstatt bloßer Betriebsbereitschaft eines gesonderten redundanten Versorgungssystemes, kann als "heiße Redundanz" bezeichnet werden.

Die so stets parallel gleichbelasteten Module müssen nicht beieinander installiert werden, sie können auch über den Bedarfsträger wie etwa die Kabine eines Verkehrsflugzeuges verteilt sein. Vorzugsweise besteht diese Energieversorgung aus Gruppen von parallel arbeitenden Modulen (Energiequellen). Wenn die Gruppen den wesentlichen Energieverbrauchern örtlich zugeordnet sind, führt das hinsichtlich Platzbedarfes und Gewichtes zu einer spürbaren Verringerung des Aufwandes an zu verlegenden Versorgungskabeln.

Wesentlich bei dieser modularisierten Energieversorgung ist also, dass jeder ihrer Module im Normalbetrieb eine spürbare Energiereserve vorhält. Der, ganzzahlig aufgerundete, Quotient aus der verfügbaren Maximalleistung eines Moduls und aus dessen darunter liegender, betriebstechnisch optimaler Belastung wird im Rahmen vorliegender Erfindung als der Modulationsgrad m dieses Modulsystemes bezeichnet. Der liegt bei gängigen aktiven Energieversorgungs-Modulen typisch in der Größenordnung von m = 3. Dies ist zugleich die Mindestanzahl der im Energieversorgungssystem parallel zu betreibenden Module. Die Energieversorgung ist dann bis zum Ausfall von m-1 Modulen sichergestellt, weil der dann einzige noch funktionstüchtig verbleibende Modul immer noch auch die Leistung für die m-1 ausgefallenen Module aufbringen kann - nun natürlich entsprechend stärker bis sogar maximal belastet und deshalb mit entsprechend verschlechtertem Wirkungsgrad, aber selbst im Dauerbetrieb immer noch nicht funktionskritisch überbelastet. Der Energiebedarf der an das, aus dieser Modulgruppe gespeiste, Netz angeschlossenen Verbraucher bleibt also auch in der extremen Notsituation des Ausfalles aller Module bis auf eines noch kontinuierlich gedeckt, es bedarf keiner Umschaltung ausgewählter Verbraucher auf ein nun erst hochzufahrendes Notstromnetz.

Je nach der bauarttypischen Funktionszuverlässigkeit des jeweiligen Moduls und der anzustrebenden System-Gesamtzuverlässigkeit liegt die Anzahl der Module am Netz bzw. in einer Modul-Gruppe in der Praxis mehr oder weniger weit über dem rechnerischen Quotienten. Ebenfalls im Interesse der Gesamt-Zuverlässigkeit sollten nicht alle Gruppen hinsichtlich der in ihnen jeweils zusammengeschalteten Module, hinsichtlich der Bereitstellung von Funktionsenergie für die Module und hinsichtlich der an deren Netz angeschlossenen Verbraucher völlig identisch ausgelegt sein. Denn bei den durch die Modularisierung ermöglichten dissimilaren Teilsystemen ist die Ausfallwahrscheinlichkeit (gegenüber untereinander identischen Systemen) deutlich reduziert, so dass es desto unwahrscheinlicher wird, dass womöglich gleiche Modul-Ausfäiie in zwei unterschiedlichen Modul-Gruppen gleichzeitig vorkommen.

Bei den passiven Modulen kann es sich insbesondere um Akkumulatoren handeln, die etwa während des Betriebes mittels wenigstens eines nur noch kleinbauenden, etwa von einer Staudruckturbine angetriebenen Generators nachgeladen werden. Alternativ könnten diese Akkumulatoren am Boden nachgeladen (Schnellladung) oder ausgetauscht werden. Der Modulationsgrad der Akkumulatoren ist bestimmt durch deren maximal zulässige Belastung im Verhältnis zur optimalen Belastung; welch letztere einen Kompromiss zwischen hohem (Entlade)Wirkungsgrad mit hoher Ausgangsspannung infolge geringer Entladestrom-Belastung und niedrigem (Entlade)Wirkungsgrad mit niedriger Ausgangsspannung infolge kleiner Abmessungen (geringe Zellenzahl bzw. Zellengröße) darstellt.

Vorzugsweise werden aber aktive Module wie Batterien und insbesondere in Form von Brennstoffzellensystemen eingesetzt, die mit regenerativ verfügbaren Treibstoffen wie Wasserstoff, Methanol oder Ethanol betrieben werden. Gerade der physikalischtechnisch gegebene Zusammenhang zwischen Optimalleistung und Maximalleistung einer Brennstoffzelle lässt mittels der erfindungsgemäßen Modularisierung eine Energieversorgung hoher Verfügbarkeit erreichen, die bei zusätzlicher Dissimilarität der Modulauslegungen wegen der Unwahrscheinlichkeit gleichzeitig auftretender ernster Fehler eine noch erhöhte Redundanz erbringt und jedenfalls den Aufwand für eine eigenständige Notstromversorgung erübrigt.

Auf Brennstoffzellen-Module beziehen sich die zeichnerisch skizzierten Realisierungsbeispiele, aus deren nachstehender Erläuterung sich weitere Merkmale und Vorteile ergeben, zusätzlich zu den in den Unteransprüchen gekennzeichneten Weiterbildungen und Alternativen vorliegender Erfindung. In der Zeichnung zeigt:
- Fig.1: die Einflussgrößen auf den Modulationsgrad einer Brennstoffzelle als Versorgurigs-Modul,
- Fig.2: eine Gruppe aus drei Modulen,
- Fig.3: gruppierte Gruppen gemäß Fig.2
- Fig.4: eine Gruppe mit modularer Peripherie für die Funktion der Module,
- Fig.5: gegenüber Fig.4 eine Vereinfachung der Architektur durch Rückgriff auf eine robuste zentrale Peripherie und
- Fig.6: ein übergeordnetes System aus mehreren Gruppen gemäß Fig.5

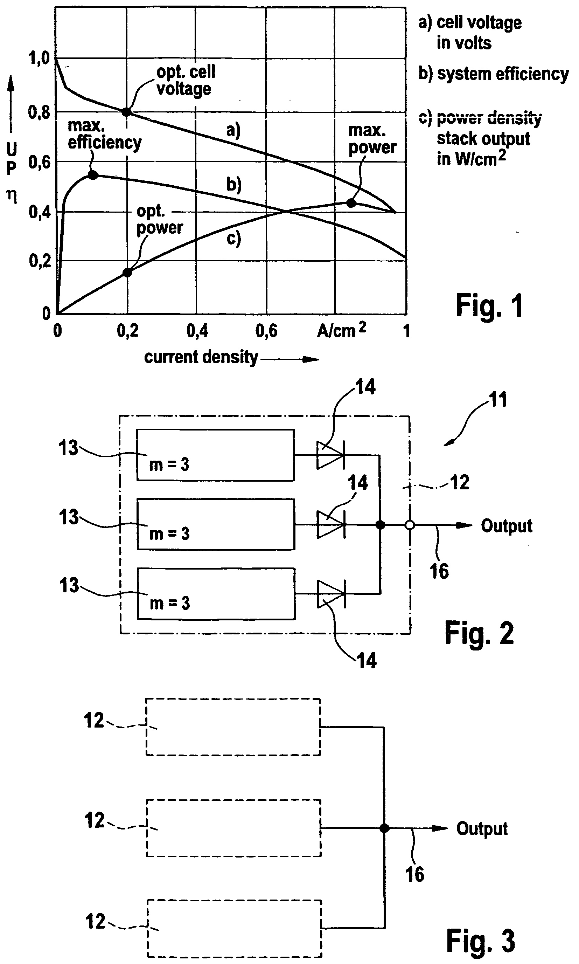

Beim Betrieb eines Stapels von Brennstoffzellen ist ein Arbeitpunkt anzustreben, der einerseits geringen Treibstoffverbrauch (geringe Belastung bzw. hohe Zellspannung) erbringt und andererseits mit geringer Stapelgröße (dem so genannten Stack aus einzelnen elektrisch in Serie geschalteten Zellen) auskommt. Die Zellenspannung sinkt mit Ansteigen des Laststromes. Deshalb erfolgt bei einem bestimmten Strom und bei der bauarttypischen optimalen Zellspannung um 0,8 Volt der Betrieb mit einerseits noch relativ günstigstem Wirkungsgrad und andererseits noch vertretbarer Stapelgröße, wie es in Fig.1 eingetragen ist. Die maximale Belastung einer Brennstoffzelle mit einem Kennlinienfeld nach Fig.1 liegt bei 0,44 Watt/cm², ihre optimale Betriebsleistung aber bei 0,15 Watt/cm². Aus diesem Unterschied resultiert als deren Leistungsdichtenquotient für diese Zelle ein Modulationsgrad von m = 3.

Deshalb sind, vgl. Fig.2, (wenigstens) drei solcher Zellen als Module 13 der modularen Stromversorgung eines Verbraucher-Netzes 16 parallel zu schalten. Wenn ein oder gar zwei deren Module 13 ausfallen, wird der letztlich verbleibende Modul 13 entsprechend stärker belastet, was den relativen Verbrauch an Treibstoff ansteigen und dadurch den Wirkungsgrad sinken lässt - aber die Stromversorgung der an den Output solch einer Gruppe 12 angeschlossenen Verbraucher bleibt unterbrechungsfrei und ohne funktionskritische Überlastung der verbleibenden Zelle aufrechterhalten. Die von den Verbrauchern angeforderte Energie wird so, durch das nicht erst einzuschaltende sondern ohnehin im überwachten Betrieb befindliche Versorgungsnetz mit dieser Modul-Gruppe 12, weiterhin kontinuierlich zur Verfügung gestellt. Je nach den Sicherheitsanforderungen kann bei der apparativen Auslegung der Modulationsgrad auch erhöht werden, er sollte aber wenigstens m = 3 betragen.

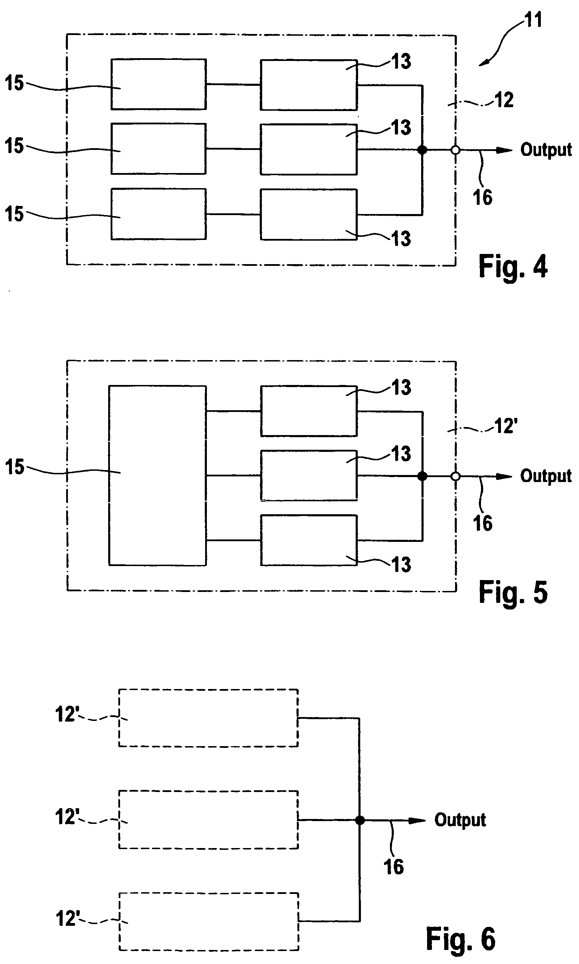

Das in Fig.2 nach Art eines einpoligen Blockschaltbildes skizzierte Energieversorgungssystem 11 besteht aus einer Gruppe 12 von drei Brennstoffzellen-Stapeln als den die Gleichspannung an das Netz 16 von Verbrauchern (nicht skizziert) liefernden Modulen 13 jeweils des Modulationsgrades 3. Die Module 13 sind ausgangsseitig über Entkopplungsschaltungen 14 parallelgeschaltet, die hier funktional, durch Dioden, angedeutet sind. Sie dienen dem Schutz der Module 13 vor funktionsschädlichen Rückwärtsspannungen. In der Praxis werden hier leistungsstarke Halbleiterschalter geringer Verlustleistung eingesetzt. Bei Einsatz von rückwärtsspannungsresistenten Brennstoffzellen dagegen, wie im Falle so genannter reversibler Brennstoffzellen, kann solche Vorsichtsmaßnahme auch entfallen, vgl. Fig.4.

In Fig.3 ist angedeutet, dass die Gruppen 12 ihrerseits zu einem übergeordneten System gruppiert werden können, was die Betriebszuverlässigkeit eines solchen Gesamtsystemes entsprechend steigert. Denn der Ausfall eines seiner Module des Modulationsgrades m = 3 reduziert bei der dargestellten Architektur die (ungeregelte) Systemleistung nur um 1/9 bzw. erhöht sich bei konstanter (geregelter) Systemleistung die Leistung der übrigen 8 Module lediglich um 9/8 = 12,5%. Deshalb genügt für die einzelnen Komponenten der Gruppen 12 eine einfache Funktionssicherheit, besonderer Sicherheitsaufwand braucht für deren Komponenten nicht getrieben zu werden.

Gemäß Fig.4 wird zweckmäßigerweise jeder der Module 13 über eine eigene Anlagen- oder Funktions-Peripherie 15 versorgt. Dabei handelt es sich im Falle von Akkumulatoren etwa um Nachlade-Generatoren, im Falle von Brennstoffzellen um die Bereitstellung (Nachliefern, Lagern und Zufuhr) ihrer Funktionsgase (Treib- und Oxydationsstoffe für die Zellenfunktion), sowie um deren betriebserforderlichen Hilfseinrichtungen wie zum Be- und Entfeuchten und zum Kühlen.

Bei Vorliegen besonders funktionsrobuster Peripherie 15, wie etwa im Falle eines keine besonderen Betriebs-Hilfseinrichtungen benötigenden Nachladegenerators für Akkumulatoren, vereinfacht sich für zumindest einige der Gruppen 12' die Geometrie durch Verwendung einer gemeinsamen Peripherie 15 nach Fig.5.

Mit derart ausgelegten Gruppen 12' ist gemäß Fig.6 ein kompakteres übergeordnetes System erstellbar.

Ein ausfallsicheres elektrisches Energieversorgungssystem 11, insbesondere in einem Luftfahrzeug, kommt so erfindungsgemäß ganz ohne den apparativen und steuerungstechnischen sowie Verkabelungs-Aufwand für eine erst bedarfsweise hochzufahrende, eigenständige Notstromversorgung aus, wenn ausgangsseitig parallelgeschaltete funktional gleichartige Versorgungs-Module 13 wie Akkumulatoren oder insbesondere Brennstoffzellen für die reguläre Versorgung des Verbraucher-Netzes 16 vorgesehen sind, wobei jeder Modul 13 bei möglichst optimalem Arbeitspunkt oder Wirkungsgrad, aber jedenfalls deutlich unterhalb maximaler Belastbarkeit beansprucht wird. Bei, dieser Energiereserve, entsprechend vielen Modulen 13 kann der Leistungsbedarf der ans Netz 16 angeschlossenen Verbraucher stets befriedigt werden, sofern nur nach etwaigem Ausfall von Modulen 13 wenigstens einer der Module 13 funktionstüchtig bleibt. Ein nicht ausgefallener Modul 13 wird nach dem Ausfall eines der anderen in dieses Netz 16 einspeisenden Module 13 dann zwar mit ungünstigerem Wirkungsgrad aber immer noch im zulässigen Lastbereich weiterbetrieben, und den Verbrauchern bleibt dadurch die Betriebsversorgung unterbrechungsfrei gewährleistet.

### Bezugszeichenliste

- 11: Energieversorgungssystem (für 16)
- 12: Gruppe (aus 13)
- 13: Module (an 16)
- 14: Entkopplungsschaltungen (zwischen 13 und 16)
- 15: Funktions-Peripherie (für 13)
- 16: Verbraucher-Netz

## Patentansprüche

1. Elektrisches Energieversorgungssystem (11), insbesondere für das Verbraucher-Netz (16) in einem Luftfahrzeug, bei welchem mehrere unterhalb ihrer maximalen Belastbarkeit parallel betriebene und ausgangsseitig parallel geschaltete Energieversorgungs-Module (13) an das Verbraucher-Netz (16) angeschlossen sind, wobei die Module (13) für Belastung bei optimalem Arbeitspunkt oder Wirkungsgrad ausgelegt sind, und die Anzahl der ausgangsseitig parallel zusammengeschalteten Module (13) wenigstens so groß wie der als ganzzahlig aufgerundeter Quotient der Leistungen aus maximaler und optimaler Belastung der Module (13) definierte Leistungsquotient ist.

2. Energieversorgungssystem nach dem vorangehenden Anspruch, **dadurch gekennzeichnet, dass** die Module (13) über das Verbraucher-Netz (16) verteilt an dieses angeschlossen sind.

3. Energieversorgungssystem nach einem der vorangehenden Ansprüche, **dadurch gekennzeichnet, dass** die den Leistungsquotienten übersteigende Anzahl von Modulen (13) jeweils zu Gruppen (12) zusammengefasst an das Verbraucher-Netz (16) angeschlossen sind.

4. Energieversorgungssystem nach dem vorangehenden Anspruch, **dadurch gekennzeichnet, dass** die Gruppen (12) über das Verbraucher-Netz (16) verteilt an dieses angeschlossen sind.

5. Energieversorgungssystem nach einem der beiden vorangehenden Ansprüche, **dadurch gekennzeichnet, dass** Gruppen (12) zu einem übergeordneten System gruppiert sind, und das übergeordnete System an das Verbraucher-Netz (16) angeschlossen ist.

6. Energieversorgungssystem nach einem der drei vorangehenden Ansprüche, **dadurch gekennzeichnet, dass** Gruppen (12) hinsichtlich der in ihnen jeweils zusammengeschalteten Module (13), hinsichtlich der Bereitstellung von Funktionsenergie für die Module (13) und hinsichtlich an das Verbraucher-Netz (16) angeschlossener Verbraucher unterschiedlich ausgelegt sind.

7. Energieversorgungssystem nach einem der vorangehenden Ansprüche, **dadurch gekennzeichnet, dass** jedes Modul (13) zu dessen Versorgung an eine eigene Peripherie (15) angeschlossen ist.

8. Energieversorgungssystem nach einem der vorangehenden Ansprüche mit Ausnahme des unmittelbar vorangehenden Anspruches, **dadurch gekennzeichnet, dass** in Gruppen (12') zusammengefasste Module (13) zu deren Versorgung an eine gemeinsame Peripherie (15) angeschlossen sind.

9. Energieversorgungssystem nach einem der vorangehenden Ansprüche, **dadurch gekennzeichnet, dass** als passive Module (13) aus einem Generator oder am Boden nachgeladene oder ausgetauschte Akkumulatoren vorgesehen sind.

10. Energieversorgungssystem nach einem der vorangehenden Ansprüche mit Ausnahme des unmittelbar vorangehenden Anspruches, **dadurch gekennzeichnet, dass** als aktive Module (13) Brennstoffzellen vorgesehen sind.

11. Energieversorgungssystem nach einem der vorangehenden Ansprüche, **dadurch gekennzeichnet, dass** zwischen den Modulen (13) und dem Verbraucher-Netz (16) Entkopplungsschaltungen (14) vorgesehen sind.

12. Verkehrsflugzeugkabine umfassend ein Energieversorgungssystem nach einem der vorangehenden Ansprüche.

## Claims

1. Electrical power supply system (11), in particular for a load network (16) in an aircraft, in which a plurality of power supply modules (13) which are operated in parallel below their maximum load capacity and are connected in parallel on the output side are connected to the load network (16), wherein the modules (13) are designed for loading at the optimum operating point or efficiency, and the number of modules (13) interconnected in parallel on the output side is at least as great as the power quotient defined as a quotient, rounded up to an integer, of the powers of the maximum and optimum load of the modules (13).

2. Power supply system according to the preceding claim, **characterized in that** the modules (13) are connected to the power supply system, distributed over the load network (16).

3. Power supply system according to one of the preceding claims, **characterized in that** the number of modules (13) which exceeds the power quotients are in each case connected to the load network (16), combined to form groups (12).

4. Power supply system according to the preceding claim, **characterized in that** the groups (12) are connected to the power supply system, distributed over the load network (16).

5. Power supply system according to one of the two preceding claims, **characterized in that** groups (12) are grouped to form a superordinate system, and the superordinate system is connected to the load network (16).

6. Power supply system according to one of the three preceding claims, **characterized in that** groups are designed differently in terms of the modules (13) which are in each case interconnected in them, in terms of the provision of functional power for the modules (13) and in terms of the loads which are connected to the load network (16).

7. Power supply system according to one of the preceding claims, **characterized in that** each module (13) for supply thereof is connected to its own peripheral (15).

8. Power supply system according to one of the preceding claims with the exception of the immediately preceding claim, **characterized in that** modules (13) which are combined in groups (12') for supply thereof are connected to a common peripheral (15).

9. Power supply system according to one of the preceding claims, **characterized in that** rechargeable batteries, which are recharged from a generator or on the ground or are replaced, are provided as passive modules (13).

10. Power supply system according to one of the preceding claims, with the exception of the immediately preceding claim, **characterized in that** fuel cells are provided as active modules (13).

11. Power supply system according to one of the preceding claims, **characterized in that** decoupling circuits (14) are provided between the modules (13) and the load network (16).

12. Passenger aircraft cabin comprising a power supply system according to one of the preceding claims.

## Revendications

1. Système d'alimentation en énergie électrique (11), notamment pour le réseau de consommateurs (16) dans un aéronef, avec lequel plusieurs modules d'alimentation en énergie (13) fonctionnant en parallèle au-dessous de leur capacité de charge maximale et dont les sorties sont branchées en parallèle sont raccordé au réseau de consommateurs (16), les modules (13) étant conçus pour être sollicités au point de fonctionnement ou au rendement optimal, et le nombre de modules (13) interconnectés en parallèle du côté de leurs sorties étant au moins égal au quotient arrondi au nombre entier des puissances du quotient de puissance défini à partir de la sollicitation maximale et optimale des modules (13).

2. Système d'alimentation en énergie selon la revendication précédente, **caractérisé en ce que** les modules (13) sont raccordés de manière distribuée au réseau de consommateurs (16) par le biais de celui-ci.

3. Système d'alimentation en énergie selon l'une des revendications précédentes, **caractérisé en ce que** le nombre de modules (13) qui dépassent les quotients de puissance sont respectivement assemblés en groupes (12) et raccordés au réseau de consommateurs (16).

4. Système d'alimentation en énergie selon l'une des revendications précédentes, **caractérisé en ce que** les groupes (12) sont raccordés de manière distribuée au réseau de consommateurs (16) par le biais de celui-ci.

5. Système d'alimentation en énergie selon l'une des deux revendications précédentes, **caractérisé en ce que** les groupes (12) sont groupés en un système de niveau supérieur et le système de niveau supérieur est raccordé au réseau de consommateurs (16).

6. Système d'alimentation en énergie selon l'une des trois revendications précédentes, **caractérisé en ce que** les groupes (12) sont conçus différemment du point de vue des modules (13) respectivement interconnectés dans ceux-ci, du point de vue de la fourniture d'énergie de fonctionnement pour les modules (13) et du point de vue des consommateurs raccordés au réseau de consommateurs (16).

7. Système d'alimentation en énergie selon l'une des revendications précédentes, **caractérisé en ce que** chaque module (13) est raccordé à un périphérique propre (15) pour son alimentation.

8. Système d'alimentation en énergie selon l'une des revendications précédentes, à l'exception de la revendication immédiatement précédente, **caractérisé en ce que** les modules (13) assemblés en groupes (12') sont raccordés à un périphérique commun (15) pour son alimentation.

9. Système d'alimentation en énergie selon l'une des revendications précédentes, **caractérisé en ce que** les modules (13) passifs prévus sont des accumulateurs qui sont rechargés depuis un générateur ou à terre ou qui sont remplacés.

10. Système d'alimentation en énergie selon l'une des revendications précédentes, à l'exception de la revendication immédiatement précédente, **caractérisé en ce que** les modules (13) actifs prévus sont des piles à combustible.

11. Système d'alimentation en énergie selon l'une des revendications précédentes, **caractérisé en ce que** des circuits de découplage (14) se trouvent entre les modules (13) et le réseau de consommateurs (16).

12. Cabine d'aéronef de ligne comprenant un système d'alimentation en énergie selon l'une des revendications précédentes.
